# EUROPÄISCHE PATENTSCHRIFT

(11) **EP 0 369 110 B1**
(45) Veröffentlichungstag und Bekanntmachung des Hinweises auf die Patenterteilung: **15.03.1995**
(21) Anmeldenummer: 89112185.7
(22) Anmeldetag: 04.07.1989
(51) Int. Cl.: H04M 1/02, H04M 1/72, H04Q 7/32

(54) **Mobiles Funktelefon**
Mobile radio telephone
Radiotéléphone mobile

(30) Priorität: 15.11.1988 DE 3838677
(43) Veröffentlichungstag der Anmeldung: 23.05.1990
(73) Patentinhaber: ROBERT BOSCH GMBH, 70442 Stuttgart (DE)
(72) Erfinder: Dallmann, Horst, D-1000 Berlin 13 (DE); Rings, Christian, Dipl.-Ing., D-1000 Berlin 37 (DE)

(56) Entgegenhaltungen:
- DE-U- 8 703 864
- US-A- 3 581 019
- US-A- 3 886 453
- US-A- 4 618 998

## Beschreibung

Die Erfindung betrifft ein mobiles Funktelefon nach dem Oberbegriff des Anspruchs 1.

### Stand der Technik

Es ist ein mobiles Funktelefon bekannt (Funkschau, 1987, Heft 9, Seiten 39 bis 42), bei dem alle Bedien- und Eingabetasten einschließlich einer Ein-Ausschalttaste für das Funktelefon in dem Handapparat des Funktelefons untergebracht sind. Das Funktelefon enthält eine Mikroprozessorschaltung zum Steuern der Funktelefon-Funktionen. Nachteilig ist bei derartigen Funktelefonen, daß die Bedien- und Eingabetasten, insbesondere auch die Ein-Ausschalttaste, während eines Gespräches unbeabsichtigt betätigt werden können, so daß es zu Datenverlusten kommen kann. Ein weiterer Nachteil besteht darin, daß während des Betriebes des Funktelefons vorhandene Einstellungen, wie zum Beispiel die Funkkanaleinstellung, die Betriebsart, die Rufnummer eines gewünschten Teilnehmers oder dergleichen, beim Ausschalten des Funktelefons verlorengehen.

### Aufgabe

Der Erfindung liegt die Aufgabe zugrunde, ein mobiles Funktelefon gemäß dem Oberbegriff des Anspruchs 1 derart weiterzubilden, daß Datenverluste durch unbeabsichtigtes Ausschalten des Funktelefons vermieden werden und daß beim erneuten Einschalten des Funktelefons die vor dem Ausschalten vorhandenen Einstellungen wieder vorhanden sind.

### Lösung und erzielbare Vorteile

Diese Aufgabe wird bei einem gattungsgemäßen mobilen Funktelefon durch die kennzeichnenden Merkmale des Anspruchs 1 gelöst. Die mit der Erfindung erzielbaren Vorteile bestehen insbesondere darin, daß nach dem erneuten Einschalten des Funktelefons alle für den Funktelefon-Teilnehmer wichtigen Daten bzw. Einstellungen automatisch wiederhergestellt werden, auch wenn zum Beispiel in der Zwischenzeit eine andere berechtigte Person das Funktelefon benutzt hat.

### Beschreibung

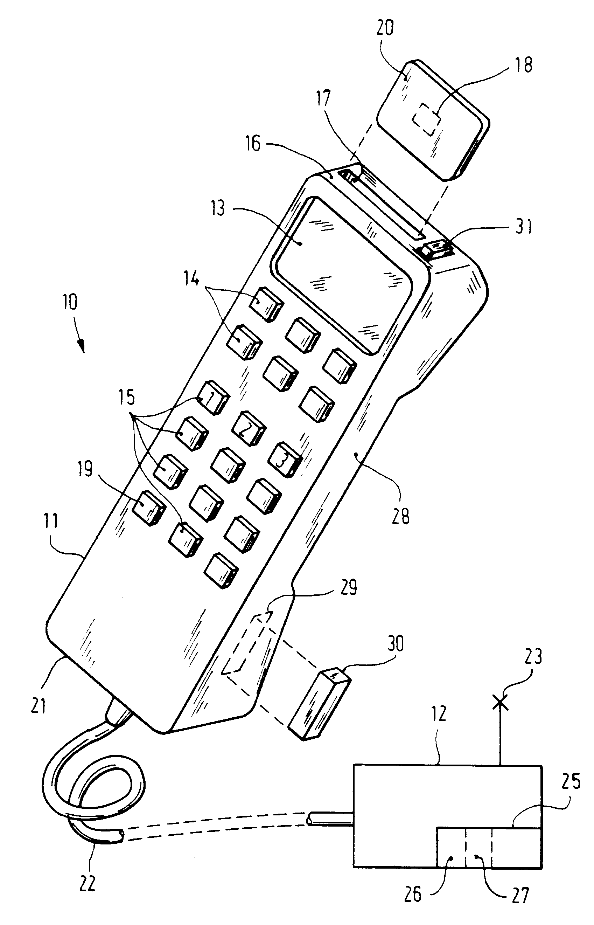

Ein Ausführungsbeispiel der Erfindung ist in der Zeichnung anhand einer einzigen Figur dargestellt und wird im folgenden näher beschrieben.

In der Figur bezeichnet 10 ein mobiles Funktelefon mit einem Handapparat 11 und einem Funksende- und -empfangsgerät 12. Der Handapparat 11 weist an seinem oberen Ende eine Anzeigevorrichtung 13, das ist zum Beispiel ein LCD-Display, und darunter Bedienelemente 14 und Eingabeelemente 15, 19 auf. Die Bedien- und Eingabeelemente sind vorzugsweise Tasten. Der Handapparat 11 enthält an seiner oberen Stirnseite 16 oder an anderer Stelle eine Öffnung 17 zum Einführen eines mobilen Speichers 18, der im eingeführten Zustand mit der Schaltung des Handapparates bzw. mit einer Mikroprozessorschaltung 25 des Funksende- und -empfangsgerätes 12 elektrisch verbunden ist. Die Öffnung 17 ist vorzugsweise schlitzförmig und als Einführöffnung für eine den mobilen Speicher 18 aufnehmende Funkteilnehmerkarte 20 ausgebildet. An der oberen Stirnseite 16 des Handapparates 11 befindet sich noch ein weiteres Bedienelement 31, das ist vorzugsweise eine Taste. An der unteren Stirnseite 21 des Handapparates tritt ein Anschlußkabel 22 aus dem Handapparat heraus, das die elektrische Verbindung zwischen diesem und dem Funksende- und -empfangsgerät 12 herstellt. Die Mikroprozessorschaltung 25 enthält einen Arbeitsspeicher 26 und einen Dauerspeicher 27. Zu dem Funksende- und -empfangsgerät gehört noch eine Sende- und Empfangsantenne 23.

Anstelle der Öffnung 17 an der oberen Stirnseite 16 des Handapparates 11 kann zum Beispiel an einer Seitenwand 28 eine Öffnung 29 vorgesehen sein, in die ein Kodierstecker 30 paßt, der die gleichen Funktionen wie der mobile Speicher 18 erfüllt.

Die Wirkungsweise des vorstehend beschriebenen mobilen Funktelefons ist folgende.

Das mobile Funktelefon 10 wird mittels eines der Eingabeelemente, zum Beispiel mittels des Ein-Ausschalters 19, eingeschaltet. Nach Einstecken der Funkteilnehmerkarte 20 in die Öffnung 17 werden die in dem mobilen Speicher 18 gespeicherten Daten in die Mikroprozessorschaltung des Funktelefons eingelesen. Nunmehr kann das mobile Funktelefon in der üblichen Weise benutzt werden, daß heißt, es kann durch Betätigung der Eingabeelemente 15 eine Rufnummer eines gewünschten Fernsprechteilnehmers gewählt werden, die auf der Anzeigevorrichtung 13 angezeigt wird. Die Steuerung für den Gesprächsaufbau erfolgt mittels der Mikroprozessorschaltung 25.

Wird das Funksende- und -empfangsgerät durch Betätigung des Ein-Ausschalters 19 ausgeschaltet, so prüft die Mikroprozessorschaltung 25, ob gerade ein Gespräch stattfindet. Ist dies der Fall, so wird der Befehl zum Ausschalten des Funktelefons nicht ausgeführt. Stellt die Mikroprozessorschaltung dagegen fest, daß kein Gespräch geführt wird, so veranlaßt sie die Ausschaltung des Funktelefons mit einer vorgegebenen Verzögerung. Vor dem Ausschalten laufen dann folgende Vorgänge ab. Zunächst werden alle zuletzt vorhandenen, von dem Funktelefon-Teilnehmer beeinflußbaren Einstellungen in Form von Daten in einem dafür reservierten Teil des mobilen Speichers 18 der Funkteilnehmerkarte 20 eingeschrieben. Derartige Einstellungen sind zum Beispiel die Funkkanalnummer, die zuletzt gewählte Rufnummer und dergleichen. Der mobile Speicher 18 ist ein nichtflüchtiger Speicher, vorzugsweise ein EEPROM.

Beim späteren Wiedereinschalten des Funktelefons durch Betätigen des EinAusschalters 19 und nach dem Einführen der Funkteilnehmerkarte 20 in die Öffnung 17 desselben Handapparates 11 werden die ursprünglich vorhandenen Einstellungen automatisch aus dem mobilen Speicher 18 ausgelesen und in die Mikroprozessorschaltung 25 übertragen. Durch dem Fachmann bekannte Maßnahmen wird sichergestellt, daß die in dem mobilen Speicher 18 gespeicherten Einstellungen nur in Handapparate des gleichen Systems übernommen werden können und nicht in einen Handapparat gleichen Typs, der in einem anderen System eingesetzt ist. Dafür dienen für den Funkteilnehmer individuelle Daten, die in dem mobilen Speicher 18 gespeichert sind.

Anschließend werden die individuellen Daten des Funktelefon-Teilnehmers aus dem mobilen Speicher 18 durch die Mikroprozessorschaltung 25 gesteuert dauernd abgefragt und mit den im Arbeitsspeicher 26 gespeicherten individuellen Daten verglichen, um festzustellen, ob der in den Handapparat eingesteckte mobile Speicher gegen einen anderen mobilen Speicher ausgetauscht wird. Findet der Austausch bei laufendem Gespräch statt, so wird das Gespräch durch die Mikroprozessorschaltung 18 beendet und vorzugsweise im Handapparat 11 ein akustisches oder optisches Alarmsignal ausgelöst. Alternativ kann vorgesehen sein, daß ein Austausch von mobilen Speichern 18 während eines Gespräches nicht möglich ist. Dies geschieht vorzugsweise durch dem Fachmann bekannte mechanische Sperrmittel.

Wenn dann ein Austausch des mobilen Speichers erforderlich wird, so ist dazu vorher das Funktelefon auszuschalten, wodurch der mobile Speicher freigegeben wird, oder es ist vorher die Taste 31 zu drücken, woraufhin die gespeicherten Daten in den mobilen Speicher 18 zurückübertragen werden und dieser bzw. die entsprechende Karte nach Übertragung für den Austausch freigegeben wird.

## Patentansprüche

1. Mobiles Funktelefon (10) mit einer Mikroprozessorschaltung (25) mit Arbeitsspeicher (26), mit einem Handapparat (11), der Bedien- und Eingabeelemente (14,15,19) einschließlich eines Ein-Ausschalters (19) für das Funktelefon aufweist, und mit einem mit dem Handapparat lösbar verbundenen mobilen Speicher (18) zum nichtlöschbaren Speichern von individuellen Daten des Funktelefon-Teilnehmers, dadurch gekennzeichnet, daß das mobile Funktelefon derart ausgestaltet ist,
a) daß ein durch Betätigen des Ein-Ausschalters (19) erzeugter Ausschaltbefehl durch die Mikroprozessorschaltung (25) des Funktelefons erst ausgeführt und der mobile Speicher (18) aus dem Handapparat (11) erst entnehmbar ist, wenn kein Telefonat stattfindet und wenn alle zu diesem Zeitpunkt vorhandenen, durch den Funktelefon-Teilnehmer beeinflußbaren Einstellungen am Handapparat in Form von variablen Daten in dem mobilen Speicher (18) nichtlöschbar gespeichert sind,
b) daß bei einem späteren Einführen des mobilen Speichers (18) in den Handapparat (11) und beim Einschalten des Funktelefons mit dem Ein-Ausschalter (19) die Mikroprozessorschaltung (25) des Handapparates das Auslesen der in dem mobilen Speicher (18) gespeicherten individuellen Daten und der den Einstellungen entsprechenden variablen Daten sowie das Übertragen dieser Daten in den Arbeitsspeicher (26) der Mikroprozessorschaltung bewirkt,
c) daß die individuellen Daten des in den Handapparat eingeführten mobilen Speichers (18) durch die Mikroprozessorschaltung gesteuert dauernd abgefragt und mit den im Arbeitsspeicher (26) gespeicherten individuellen Daten verglichen werden,
d) daß, wenn kein Gespräch geführt wird, ein Austausch des mobilen Speichers (18) gegen einen anderen mobilen Speicher erst nach Rückschreiben aller variablen Daten in den Arbeitsspeicher (26) möglich ist und daß nach Einführen des neuen mobilen Speichers dessen individuelle Daten sofort ausgelesen und in den Arbeitsspeicher der Mikroprozessorschaltung (25) eingeschrieben werden und
e) daß, wenn ein Gespräch geführt wird, ein Austausch von mobilen Speichern (18) eine Beendigung des Gespräches zur Folge hat.

2. Mobiles Funktelefon nach Anspruch 1, dadurch gekennzeichnet, daß die Mikroprozessorschaltung (25) derart ausgestaltet ist, daß beim Herausnehmen des ersten mobilen Speichers (18) aus dem Handapparat (11) ohne vorheriges Übertragen der Daten des Arbeitsspeichers (26) in den ersten mobilen Speicher ein Alarmsignal ausgelöst wird.

3. Mobiles Funktelefon nach einem der Ansprüche 1 bis 2, dadurch gekennzeichnet, daß der mobile Speicher (18) eine integrierte Schaltung ist, die Bestandteil einer in eine Öffnung (17) des Handapparates (11) einführbaren Funkteilnehmerkarte (20) ist, und daß die integrierte Schaltung im eingeführten Zustand der Funkteilnehmerkarte mit der Mikroprozessorschaltung (25) des Funksende- und -empfangsgerätes (12) elektrisch verbunden ist.

4. Mobiles Funktelefon nach Anspruch 1, dadurch gekennzeichnet, daß der mobile Speicher Bestandteil eines Kodiersteckers (30) ist, der von außen in eine Vertiefung (29) des Handapparates (11) einsteckbar ist und der im eingesteckten Zustand mit der Mikroprozessorschaltung (25) des Funksende- und -empfangsgerätes (12) elektrisch verbunden ist.

5. Mobiles Funktelefon nach Anspruch 1, dadurch gekennzeichnet, daß der mobile Speicher (18) ein nichtlöschbarer elektronischer Speicher vom EEPROM-Typ ist.

6. Mobiles Funktelefon nach Anspruch 1, dadurch gekennzeichnet, daß mechanische Sperrmittel derart vorgesehen sind, daß wenn ein Gespräch geführt wird, ein Herausnehmen des mobilen Speichers (18) aus dem Handapparat verhindert wird.

7. Mobiles Funktelefon nach Anspruch 6, dadurch gekennzeichnet, daß ein bestimmtes Bedienelement (31) vorgesehen ist, durch das die mechanische Sperre aufhebbar ist.

8. Mobiles Funktelefon nach Anspruch 6, dadurch gekennzeichnet, daß der Ein-Ausschalter (19) derart vorgesehen ist, daß beim Ausschalten des Funktelefons die mechanische Sperre aufhebbar ist.

## Claims

1. Mobile radio telephone (10) with a microprocessor circuit (25) with main memory (26), with a handset (11) which exhibits operating and input elements (14, 15, 19) including an on/off switch (19) for the radio telephone, and with a mobile memory (18), which is detachably connected to the handset, for the non-erasable storage of individual data of the radio telephone subscriber, characterized in that the mobile radio telephone is designed in such a manner
a) that a switch-off command generated by operating the on/off switch (19) is only executed by the microprocessor circuit (25) of the radio telephone, and the mobile memory (18) can only be taken from the handset (11), when no telephone conversation is taking place and when all adjustments on the handset which are present at this time and which can be influenced by the radio telephone subscriber are non-erasably stored in the form of variable data in the mobile memory (18),
b) that, with a later insertion of the mobile memory (18) into the handset (11) and on switching on of the radio telephone by means of the on/off switch (19), the microprocessor circuit (25) of the handset effects the reading-out of the individual data stored in the mobile memory (18) and of the variable data corresponding to the adjustments and the transfer of these data into the main memory (26) of the microprocessor circuit,
c) that the individual data of the mobile memory (18) inserted into the handset are continuously interrogated under control of the microprocessor circuit and are compared with the individual data stored in the main memory (26), and
d) that, when no conversation is held, it is only possible to exchange the mobile memory (18) for another mobile memory after all variable data have been written back into the main memory (26) and that, after the new mobile memory has been inserted, its individual data are immediately read out and written into the main memory of the microprocessor circuit (25), and
e) that, when a conversation is being held, an exchange of mobile memories (18) results in a termination of the conversation.

2. Mobile radio telephone according to Claim 1, characterized in that the microprocessor circuit (25) is designed in such a manner that, when the first mobile memory (18) is taken out of the handset (11) without the data of the main memory (26) first having been transferred into the first mobile memory, an alarm signal is triggered.

3. Mobile radio telephone according to one of Claims 1 to 2, characterized in that the mobile memory (18) is an integrated circuit which is a component of a radio subscriber card (20) which can be inserted into an opening (17) of the handset (11), and that the integrated circuit is electrically connected to the microprocessor circuit (25) of the radio transceiver (12) in the inserted state of the radio subscriber card.

4. Mobile radio telephone according to Claim 1, characterized in that the mobile memory is a component of a coding plug (30) which can be inserted from the outside into a recess (29) in the handset (11) and which is electrically connected to the microprocessor circuit (25) of the radio transceiver (12) in the inserted state.

5. Mobile radio telephone according to Claim 1, characterized in that the mobile memory (18) is a non-erasable electronic memory of the EEPROM type.

6. Mobile radio telephone according to Claim 1, characterized in that mechanical locking means are provided in such a manner that when a conversation is held, a removal of the mobile memory (18) from the handset is prevented.

7. Mobile radio telephone according to Claim 6, characterized in that a particular operating element (31) is provided by means of which the mechanical lock can be cancelled.

8. Mobile radio telephone according to Claim 6, characterized in that the on/off switch (19) is provided in such a manner that, when the radio telephone is switched off, the mechanical lock can be cancelled.

## Revendications

1. Radiotéléphone (10) avec un circuit à microprocesseur (25) avec une mémoire de travail (26), avec un appareil à main (11), qui présente des éléments de manoeuvre et d'entrée des données (14, 15, 19) y compris une touche de marche-arrêt (19) pour le radiotéléphone et avec une mémoire mobile (18) reliée de façon détachable à l'appareil à main pour mettre en mémoire d'une façon qui ne puisse pas s'effacer des données individuelles de l'usager du radiotéléphone, caractérisé par le fait qu'il est conçu de telle façon que :
a) un ordre de débranchement produit en actionnant la touche de marche-arrêt (19) est exécuté par le circuit à microprocesseur (25) du radiotéléphone et la mémoire mobile (18) peut être extraite de l'appareil à main (11) seulement quand il n'y a pas de conversation téléphonique et quand tous les réglages existant à cet instant, pouvant être influencés par l'usager du radiotéléphone sont mis en mémoire dans l'appareil à main sous forme de données variables dans la mémoire mobile (18) d'une façon qui ne peut pas être effacée.
b) dans le cas d'une introduction ultérieure de la mémoire mobile (18) dans l'appareil à main (11) et lors de la mise en marche du radiotéléphone avec la touche de marche-arrêt (19), le circuit à microprocesseur (25) de l'appareil à main provoque l'extraction des données individuelles mises en mémoire dans la mémoire mobile (18) et des données variables correspondant aux réglages ainsi que le transfert de ces données dans la mémoire de travail (26) du circuit à microprocesseur.
c) les données individuelles de la mémoire mobile (18) introduite dans l'appareil à main sont interrogées en permanence en étant commandées par le circuit à microprocesseur et sont comparées aux données individuelles mises en mémoire dans la mémoire de travail (26).
d) quand il n'y a pas de conversation en train, il n'est possible d'avoir un échange de la mémoire mobile (18) avec une autre mémoire mobile qu'après le réenregistrement de toutes les données variables dans la mémoire de travail (26) et après l'introduction de la nouvelle mémoire mobile les données individuelles de celle-ci sont aussitôt extraites et sont enregistrées dans la mémoire de travail du circuit à microprocesseur (25) et
e) quand une conversation est établie un échange des mémoires mobiles (18) a pour conséquence de mettre fin à la conversation.

2. Radiotéléphone mobile selon la revendication 1, caractérisé en ce que le circuit à microprocesseur (25) est constitué de telle façon que lors de l'extraction de la première mémoire mobile (18) de l'appareil à main (11) sans transfert préalable des données de la mémoire de travail (26) dans la première mémoire mobile un signal d'alarme soit déclenché.

3. Radiotéléphone mobile selon l'une des revendications 1 à 2, caractérisé en ce que la mémoire mobile (18) est un circuit intégré, qui est un composant d'une carte d'usager radio (20) pouvant être introduite dans une ouverture (17) de l'appareil à main (11) et en ce que le circuit intégré quand la carte de l'usager radio est en position introduite est reliée électriquement au circuit à microprocesseur (25) de l'appareil radio à émetteur-récepteur (12).

4. Radiotéléphone mobile selon la revendication 1, caractérisé en ce que la mémoire mobile est un composant d'une fiche de codification (30), qui peut être enfichée de l'extérieur dans un renfoncement (29) de l'appareil à main (11) et qui est relié électriquement au circuit à microprocesseur (25) de l'appareil radio émetteur-récepteur (12) quand il est en position enfichée.

5. Radiotéléphone mobile selon la revendication 1, caractérisé en ce que la mémoire mobile (18) est une mémoire électronique non effaçable du type EEPROM (mémoire morte effaçable par voie électronique).

6. Radiotéléphone mobile selon la revendication 1, caractérisée en ce que l'on prévoit des moyens mécaniques de blocage tels que quand une conversation est entrain, il ne soit pas possible d'extraire la mémoire mobile (18) de l'appareil à main.

7. Radiotéléphone mobile selon la revendication 6, caractérisé en ce que l'on prévoit un élément de manoeuvre déterminé (31), grâce auquel on puisse supprimer le blocage mécanique.

8. Radiotéléphone mobile selon la revendication 6, caractérisé en ce que la touche de marche-arrêt (19) est prévue de telle façon que l'on puisse supprimer le blocage mécanique lors du débranchement du radiotéléphone.
